# EUROPEAN PATENT SPECIFICATION

(11) **EP 1 886 885 B1**
(45) Date of publication and mention of the grant of the patent: **15.06.2011**
(21) Application number: 07253004.1
(22) Date of filing: 31.07.2007
(51) Int. Cl.: B60R 25/04

(54) **Vehicle control apparatus and vehicle provided with the same**
Fahrzeugsteuerungsvorrichtung und damit ausgestattetes Fahrzeug
Appareil de contrôle de véhicule et véhicule équipé avec celui-ci

(30) Priority: 01.08.2006 JP 2006210025
(43) Date of publication of application: 13.02.2008
(73) Proprietor: Yamaha Hatsudoki Kabushiki Kaisha, Shizuoka-ken Shizuoka 438-8501 (JP)
(72) Inventor: Yoshizawa, Akihiro, Yamaha Hatsudoki Kabushiki Kaisha, Iwata-shi, Shizuoka-ken 438-8501 (JP)
(74) Representative: Lamb, Martin John Carstairs

(56) References cited:
- EP-A1- 1 591 329
- EP-A1- 1 669 264
- JP-A- 2003 064 918
- US-A1- 2006 187 007

## Description

### FIELD OF THE INVENTION

This invention relates to a vehicle control apparatus and a vehicle provided with the same and, in particular, to a vehicle control apparatus capable of transmitting and receiving a signal to and from a mobile device for permission authentication for use of a vehicle and a vehicle provided with the same.

### BACKGROUND TO THE INVENTION

There is known an electronic key system for a vehicle capable of transmitting and receiving a signal to and from a mobile device for permission authentication for use of a vehicle. Such a system is disclosed in JP-A-2004-114860. In this reference, after an engine is started, a request signal is transmitted from a vehicle-side transmitting circuit to an electronic key at predetermined intervals and a response signal is transmitted from the electronic key having received the request signal to a vehicle-side receiving circuit. When the vehicle-side receiving circuit does not continuously receive response signals of a number larger than a specified number, there is a high possibility that the electronic key will be not within a receivable range and there is a high possibility that a driver has dropped the electronic key, so the system is constructed so as to light an alarm light in order to let the driver know that he has dropped the electronic key. However, in JP-A-2004-114860 after the engine is started, the request signal is transmitted at predetermined intervals from the vehicle-side transmitting circuit to the electronic key and the response signal is transmitted from the electronic key having received the request signal to the vehicle-side receiving circuit, so the request signal and the response signal are transmitted and received even when the vehicle is in a stop state. Also when the driver has dropped the electronic key in the case where the vehicle is substantially in the stop state, there is a high possibility that the electronic key will be located within a transmittable range near the vehicle, so there is a high possibility that the request signal and the response signal will be transmitted and received. For this reason, when the vehicle is substantially in the stop state, it is difficult to inform the driver that the driver has dropped the electronic key when the driver has dropped the electronic key, so the need for conducting the communications between the vehicle-side transmitting circuit and receiving circuit and the electronic key is low. In this manner, in JP-A-2004-114860, even when the need for conducting the communications between the vehicle-side transmitting circuit and receiving circuit and the electronic key is low, the request signal and the response signal are transmitted and received at specified intervals. Thus, this raises a problem that it is difficult to suppress the consumption of a battery of the electronic key.

Other examples of electronic key systems are known. US 2006/187007 A describes an electronic key system for a vehicle that provides a warning corresponding to a traveling state if an occupant has dropped the electronic key while a vehicle is running. A control unit of the vehicle outputs a request signal to the electronic key at transmission intervals corresponding to the traveling state. An answer signal caused by the request signal from the electronic key is detected. A warning lamp is lit up at a point after the detection of the answer signal stops. During a time when the vehicle has stopped, transmission timing determining means sets the transmission interval to an amount T0 and performs transmission at this interval so as to output a warning in the case where the occupant has dropped the electronic key while the vehicle is stopped.

Especially, the document US2006/187007 discloses a vehicle control apparatus comprising:
transmitting means disposed on a vehicle side and adapted to transmit a code request signal at specified intervals to a mobile device associated with a vehicle for determining whether the mobile device is located within a specified range of the vehicle;
receiving means disposed on the vehicle side and adapted to receive a code signal transmitted from the mobile device having received the code request signal; and
a control section adapted to control the transmitting means.

JP2003064918 describes a keyless remote control device for transmitting and outputting a control signal of a locking or an unlocking signal by operating a switch and a keyless entry control unit for locking and unlocking lock actuators. The keyless remote control device includes a normal mode for transmitting and outputting the control signal to the keyless entry control unit and a transmission and output stop mode for stopping the transmission and output of the control signal. Switching between the two modes is achieved by simultaneous pressing of both lock and unlock buttons on the key, wherein simultaneous pressing is determined when both keys are pressed within a predetermined time period.

EP1669264 describes a remote key capable of preventing the malfunction of a keyless engine starting system. A remote key conducts communication with a vehicle in the verification area of the vehicle and transmits identification information to the vehicle to unlock the lock of an engine starting switch on the vehicle, thereby bringing an engine to a state in which it is ready to start. A push button on the remote key brings a function of conducting communication with the vehicle to an inoperable state or to an active state.

This invention has been made to solve the foregoing problem. One object of this invention is to provide a vehicle control apparatus capable of suppressing the consumption of a battery of a mobile device and a vehicle provided with the same.

### SUMMARY OF THE INVENTION

According to a first aspect of the present invention, there is provided a vehicle control apparatus comprising:
transmitting means disposed on a vehicle side and adapted to transmit a code request signal at specified intervals to a mobile device associated with a vehicle for determining whether the mobile device is located within a specified range of the vehicle;
receiving means disposed on the vehicle side and adapted to receive a code signal transmitted from the mobile device having received the code request signal; and
a control section adapted to stop the transmitting means from transmitting when the vehicle is substantially in a stop state.

The code request signal and the code signal may be signals for detecting drop of the mobile device.
The control section may be adapted to permit the transmitting means to transmit when the vehicle is changed from a state in which the vehicle is substantially stopped to an operating state.

The control section may be adapted to recognize a substantially stop state of the vehicle when a speed of the vehicle is a specified value or less.

The vehicle control apparatus may further comprise vehicle speed detection means adapted to detect a speed of the vehicle. The vehicle control apparatus may further comprise stop detecting means adapted to detect whether the vehicle is substantially in a stopped state. The stop detecting means may be disposed separately from the vehicle speed detecting means.

The stop detection means may include a stand state detection part for detecting whether a parking stand of the vehicle is in a parking state.

According to a second aspect of the present invention, there is provided a vehicle control apparatus comprising:
transmitting means disposed on a vehicle side and adapted to transmit a code request signal at specified intervals to a mobile device associated with a vehicle for determining whether the mobile device is located within a specified range of the vehicle;
receiving means disposed on the vehicle side and adapted to receive a code signal transmitted from the mobile device having received the code request signal; and
a control section adapted to control the transmitting means so as to permit transmission at specified intervals when the vehicle is substantially in an operating state.

The control section may be adapted to recognize a substantially operating state when a speed of the vehicle is larger than a specified value.

A vehicle control apparatus according to a third aspect of the invention includes: transmitting means that is disposed on a vehicle side and transmits a code request signal for checking whether a mobile device for permission authentication for use of a vehicle is located within a specified range from the vehicle to the mobile device at specified intervals; receiving means that is disposed on the vehicle side and receives a code signal transmitted from the mobile device having received the code request signal; and a control section that stops the transmitting means from making transmission at specified intervals when the vehicle is substantially in a stop state in a state in which a communication system constructed of the transmitting means, the receiving means, and the mobile device is on.

In the vehicle control apparatus there is provided the control section that stops the transmitting means from making transmission at specified intervals when the vehicle is substantially in the stop state in the state in which the communication system is on. Thus, when the vehicle is substantially in the stop state in which the need for conducting communication between the vehicle-side transmitting means and receiving means and the mobile device is thought to be low because the detection of drop of the mobile device is difficult, the communication between the vehicle-side transmitting means and receiving means and the mobile device can be stopped. This can effectively suppress the consumption of a battery of the mobile device.

In the vehicle control apparatus the code request signal and the code signal may be signals for detecting drop of the mobile device. With this construction, the code request signal and the code signal can be made simple short signals only for determining whether the mobile device is dropped. Thus, the interval of communication between the transmitting means and receiving means and the mobile device can be made short. This can further suppress the consumption of the battery of the mobile device.

In the vehicle control apparatus, when the speed of the vehicle is a specified value or less in the state in which the communication system is on, the control section assumes the vehicle to be substantially in the stop state and stops the transmitting means from making transmission at specified intervals. With this construction, it is possible to easily determine whether the vehicle is substantially in the stop state by the use of the speed of the vehicle.

In the vehicle control apparatus that stops the transmitting means from making transmission at specified intervals when the speed of the vehicle is a specified value or less, there is further provided vehicle speed detection means for detecting the speed of the vehicle. With this construction, the speed of the vehicle can be easily detected. Thus, it is possible to more easily determine whether the vehicle is substantially in the stop state.

In the vehicle control apparatus, when the vehicle is changed from a state in which the vehicle is substantially stopped to an operating state in the state in which the communication system is on, the control section controls the transmitting means so as to make transmission at specified intervals. With this construction, only when the vehicle is in the operating state, the communication between the vehicle-side transmitting means and receiving means and the mobile device can be conducted. This can effectively suppress the consumption of the battery of the mobile device.

In the vehicle control apparatus in which the control section controls the transmitting means so as to make transmission at specified intervals when the vehicle is changed from the state in which the vehicle is substantially in the stop state to the operating state, preferably, when the speed of the vehicle is larger than a specified value in the state in which the communication system is on, the control section assumes the vehicle to be changed from the state in which the vehicle is substantially stopped to the operating state and controls the transmitting means so as to make transmission at specified intervals. With this construction, it is possible to easily determine by the use of the speed of the vehicle whether the vehicle is changed from the state in which the vehicle is substantially stopped to the operating state.

In this case, there may be further provided vehicle speed detection means for detecting a speed of the vehicle. With this construction, the speed of the vehicle can be easily detected. Thus, it is possible to easily determine whether the state in which the vehicle is substantially stopped is changed to the operating state.

In the vehicle control apparatus , there may be further provided vehicle speed detection means for detecting a speed of the vehicle and stop detection means that is disposed separately from the vehicle speed detection means and detects whether the vehicle is substantially in the stop state. With this construction, it can be easily detected by the use of the stop detection means whether the vehicle is substantially in the stop state.

In the vehicle control apparatus provided with the vehicle speed detection means and the stop detection means, the stop detection means may include a stand state detection part for detecting whether a parking stand of the vehicle is in a parking state. With this construction, it can be easily detected by the use of the stand state detection part whether the stand is in the parking state. Thus, it can be further easily determined whether the vehicle is substantially in the stop state.

A vehicle control apparatus according to a fourth aspect of the invention includes: transmitting means that is disposed on a vehicle side and transmits a code request signal for checking whether a mobile device for permission authentication for use of a vehicle is located within a specified range from the vehicle to the mobile device at specified intervals; receiving means that is disposed on the vehicle side and receives a code signal transmitted from the mobile device having received the code request signal; and a control section that controls the transmitting means so as to make transmission at specified intervals when the vehicle is substantially in an operating state in a state in which a communication system constructed of the transmitting means, the receiving means, and the mobile device is on.

In the vehicle control apparatus, there is provided the control section that controls the transmitting means so as to make transmission at specified intervals when the vehicle is substantially in the operating state in the state in which the communication system is on. Thus, only when the vehicle in which the need for communications between the vehicle-side transmitting means and receiving means and the mobile device is thought to be high is substantially in the operating state, the communications between the vehicle-side transmitting means and receiving means and the mobile device can be conducted. This can effectively suppress the consumption of the battery of the mobile device.

In the vehicle control apparatus, when the speed of the vehicle is larger than a specified value in the state in which the communication system is on, the control section assumes the vehicle to be substantially in the operating state and controls the transmitting means so as to make transmission at specified intervals. With this construction, it can be easily determined by the use of the speed of the vehicle whether the vehicle is substantially in the operating state.

A vehicle according to a fifth aspect of the invention includes the vehicle control apparatus of any one of the foregoing constructions. With this construction, it is possible to acquire a vehicle capable of suppressing the consumption of the battery of the mobile device.

### BRIEF DESCRIPTION OF THE INVENTION

These and other aspects of the present invention will be described below, by way of example only, with reference to the accompanying drawings, in which:
Fig. 1 is a side view showing the general structure of a motorcycle according to a first embodiment of the present invention;
Fig. 2 is a diagrammatic representation of the construction of a vehicle control apparatus of the motorcycle according to the first embodiment shown in Fig. 1;
Fig. 3 is a flow chart showing the process flow of the vehicle control apparatus according to the first embodiment shown in Fig. 1;
Fig. 4 is a flow chart showing in detail the process flow of detecting a dropped mobile device;
Fig. 5 is a diagrammatic representation of the construction of a vehicle control apparatus of a motorcycle according to a second embodiment of the invention; and
Fig. 6 is a flow chart showing the process flow of detecting a dropped mobile device according to the second embodiment of the invention;

### DETAILED DESCRIPTION OF THE DRAWINGS

### First Embodiment

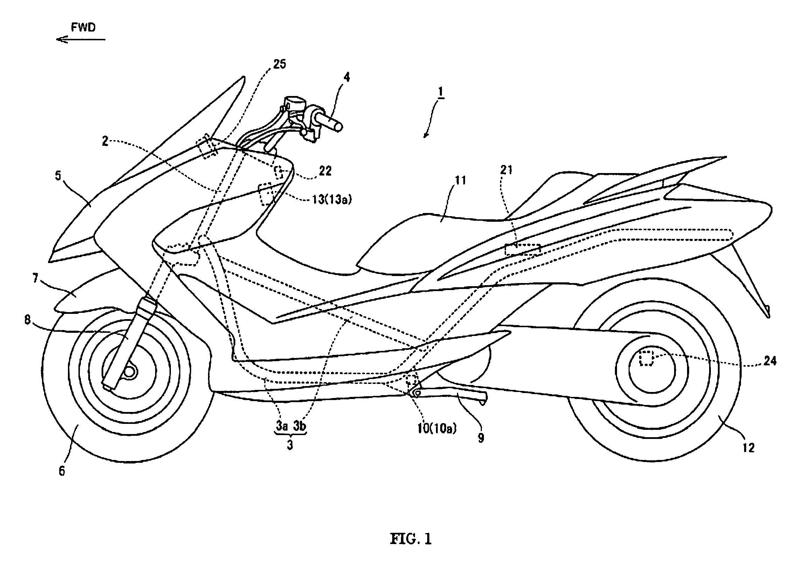

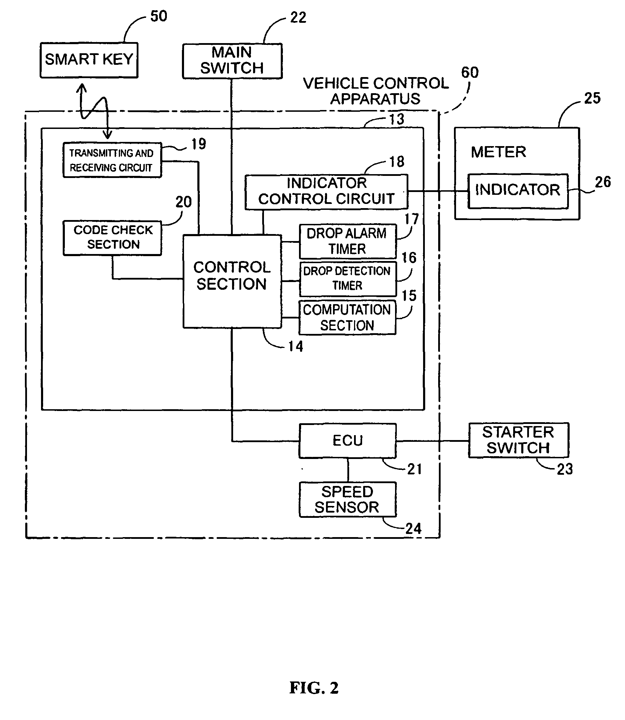

Fig. 1 is a side view showing the general structure of a motorcycle according to a first embodiment of the present invention. Fig. 2 diagrammatically shows the construction of a vehicle control apparatus of the motorcycle according to the first embodiment shown in Fig. 1. In the first embodiment, the motorcycle will be described as an example of the vehicle of the invention. In the drawing, an arrow marked FWD denotes a front direction in which the motorcycle runs. Hereinafter, the structure of the motorcycle 1 according to the first embodiment of the invention will be described with reference to Fig. 1 and Fig. 2.

In the motorcycle 1 according to the first embodiment of the invention, as shown in Fig. 1, a main frame 3 is disposed rearward of a head pipe 2. The main frame 3 includes a frame main part 3a forming a main part of the main frame 3 and a support part 3b supporting two upper points of the frame main part 3a. A vehicle frame is defined at least in part by the head pipe 2 and the main frame 3.

A handle 4 having a throttle (not shown) secured thereto is disposed above the head pipe 2. A front cowl 5 covering the front of the head pipe 2 is disposed forward of the head pipe 2. A front wheel 6 and a front fender 7 disposed above the front wheel 6 are disposed below the front cowl 5. The front wheel 6 is rotatably secured to the lower portions of a pair of front forks 8.

A parking stand 9 and a stand state detection part 10 for detecting whether the stand 9 is in a parking state are disposed below the central portion of the main frame 3. A seat 11 is disposed above the rear portion of the main frame 3 and a rear wheel 12 is rotatably disposed below the rear end of the main frame 3.

A control unit 13 is disposed rearward of the head pipe 2. The control unit 13, as shown in Fig. 2, is provided with a control section 14 and parts connected to the control section 14, the parts including a computation section 15, a drop detection timer 16, a drop alarm timer 17, an indicator control circuit 18, a transmitting and receiving circuit 19, and a code check section 20. The transmitting and receiving circuit 19 is one example of a "transmitting means" and a "receiving means" of the invention.

The control section 14 is connected to an ECU (engine control unit) 21 disposed below the seat 11 (see Fig. 1) and a main switch 22 disposed below a central portion in a direction of width of the handle 4 (see Fig. 1). The control section 14 and the ECU 21 are constructed so as to conduct serial communications by the use of an SCI (serial communication interface, not shown). The ECU 21 is connected to a starter switch 23 secured to the handle 4 (see Fig. 1) and a speed sensor 24 disposed near the rear wheel 12 (see Fig. 1) for detecting the number of revolutions of the rear wheel 12. A vehicle control apparatus 60 is constructed of the ECU 21, the speed sensor 24, and the control unit 13. The speed sensor 24 is one example of a "vehicle speed detection means" of the invention. The ECU 21 has the function of transmitting a signal to the control section 14 when the starter switch 23 is turned on. The ECU 21 also has the function of transmitting the number of revolutions of the rear wheel 12, which is detected by the speed sensor 24, to the control section 14.

In the first embodiment, the control section 14 is constructed so as to conduct communications between the transmitting and receiving circuit 19 and a smart key 50 for permission authentication for use of the motorcycle 1 (the smart key 50 will be described later) when the main switch 22 is turned on. The control section 14 is constructed in such a way that when the smart key 50 is determined to be a smart key corresponding to or associated with the motorcycle 1, a communication system between the transmitting and receiving circuit 19 and the smart key 50 is brought to an on state, the communication system being used for detecting drop of the smart key 50. The smart key 50 is one example of a "mobile device" of the invention.

The control section 14 is constructed so as to stop conducting communication for detecting drop of the smart key 50 when a vehicle speed is 0 km/h in a state in which the communication system between the transmitting and receiving circuit 19 and the smart key 50 is on, the communication system being used for detecting drop of the smart key 50.

The computation section 15 has the function of computing a vehicle speed on the basis of the number of revolutions of the rear wheel 12 transmitted from the control section 14 (ECU 21).

The drop detection timer 16 has a subtraction counter or countdown timer length set for 10 seconds. The drop detection timer 16 is constructed in such a way that when the drop detection timer 16 is turned on by the control section 14, the subtraction counter is brought to 0 after 10 seconds. Furthermore, the drop alarm timer 17 has a subtraction counter length set for 60 seconds. The drop alarm timer 17 is constructed in such a way that when the drop alarm timer 17 is turned on by the control section 14, the subtraction counter is brought to 0 after 60 seconds.

The indicator control circuit 18 is connected to an indicator 26 disposed in a meter 25 (see Fig. 1) arranged rearward of the front cowl 5 (see Fig. 1). The indicator control circuit 18 has the function of blinking or turning off the indicator 26 by a signal from the control section 14.

The transmitting and receiving circuit 19 is constructed so as to be able to conduct communication with the smart key 50. Specifically, in the first embodiment, the smart key 50 has a battery (not shown) built therein and has an individual recognition code and a drop detection code recorded therein, the individual recognition code being used for determining whether the smart key 50 corresponds to the motorcycle 1, and the drop detection code being used for checking whether the smart key 50 is located within a specified range (about 1 m) from the motorcycle 1 in order to determine whether the driver has dropped the smart key 50. The individual recognition code is constructed of a complex long code so as to enhance an antitheft function, whereas the drop detection code is constructed of a simple short code only for determining whether the smart key 50 is located within the specified range (about 1 m) from the motorcycle 1. That is, an individual recognition code signal used when the individual recognition code is transmitted from the smart key 50 to the transmitting and receiving circuit 19 is constructed of a complex long code signal, whereas a drop detection code signal used when the drop detection code is transmitted is constructed of a simple short code signal.

The transmitting and receiving circuit 19 is constructed so as to be able to transmit an individual recognition code request signal for requesting the smart key 50 to transmit the individual recognition code and a drop detection code request signal for requesting the smart key 50 to transmit the drop detection code to the smart key 50. Each of the individual recognition code request signal and the drop detection code request signal is constructed of a simple short signal.

The transmitting and receiving circuit 19 is controlled by the control section 14 so as to transmit the individual recognition code request signal to the smart key 50 when the main switch 22 is pressed by the driver. The transmitting and receiving circuit 19 is also constructed so as to transmit the drop detection code request signal to the smart key 50 when the subtraction counter of the drop detection timer 16 is brought to 0 in the state in which the communication system between the transmitting and receiving circuit 19 and the smart key 50 is on, the communication system being used for detecting drop of the smart key 50. Furthermore, the transmitting and receiving circuit 19 has the function of transmitting a signal received from the smart key 50 to the control section 14.

When the signal received from the smart key 50 is transmitted from the transmitting and receiving circuit 19 to the control section 14, the code check section 20 acquires the signal from the control section 14, which is the function of the code check section 20. In the code check section 20 are recorded the same individual recognition code and drop detection code as recorded in the smart key 50. The code check section 20 is constructed in such a way that when the individual recognition code or the drop detection code is transmitted from the control section 14 (smart key 50), the code check section 20 determines whether the transmitted individual recognition code or drop detection code corresponds to the individual recognition code or the drop detection code which are recorded in the code check section 20.

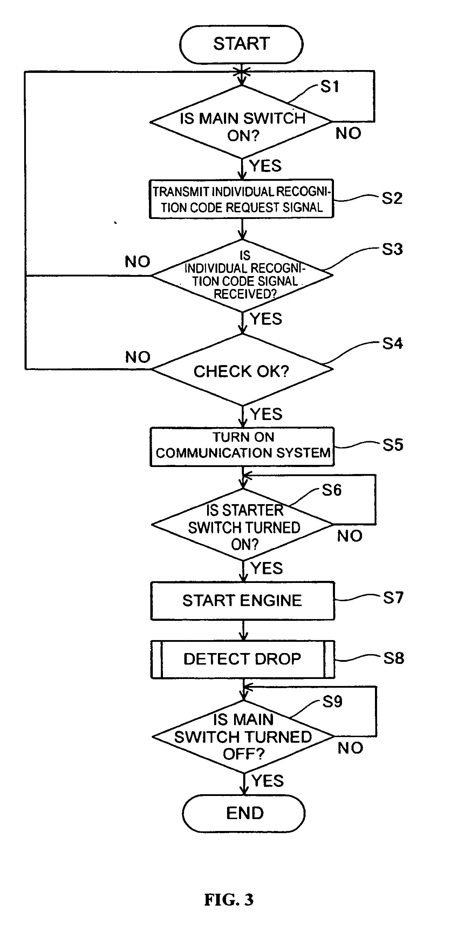

Fig. 3 is a flow chart showing the process flow of the vehicle control apparatus according to the first embodiment shown in Fig. 1. In step S1 shown in Fig. 3, it is determined whether the main switch 22 (see Fig. 2) is turned on. If it is determined in step S1 that the main switch 22 is not turned on, the determination in step S1 is repeatedly made. If it is determined in step S1 that the main switch 22 is turned on, the fact that the main switch 22 is turned on is transmitted to the control section 14 (see Fig. 2) and the routine proceeds to step S2. Then, in step S2, the individual recognition code request signal is transmitted from the transmitting and receiving circuit 19 (see Fig. 2) to the smart key 50 (see Fig. 2). At this time, when the smart key 50 is located within a transmittable range (about 1 m) near the control unit 13 (transmitting and receiving circuit 19), the individual recognition code request signal from the transmitting and receiving circuit 19 is received by the smart key 50 and the individual recognition code signal is transmitted from the smart key 50 to the transmitting and receiving circuit 19.

Then, in step S3, it is determined whether the individual recognition code signal is received by the transmitting and receiving circuit 19. If it is determined in step S3 that the individual recognition code signal is not received, the routine returns to step S1. However, if it is determined in step S3 that the individual recognition code signal is received, the routine proceeds to step S4.

Then, in step S4, the received individual recognition code signal is transmitted to the code check section 20 via the control section 14 and it is determined by the code check section 20 whether the individual recognition code corresponding to the individual recognition code signal received from the smart key 50 (control section 14) corresponds to the individual recognition code previously recorded in the code check section 20. If it is determined in step S4 that the individual recognition code corresponding to the individual recognition code signal received from the smart key 50 (control section 14) does not correspond to the individual recognition code previously recorded in the code check section 20, the routine returns to step S1. However, if it is determined in step S4 that the individual recognition code corresponding to the individual recognition code signal received from the smart key 50 (control section 14) corresponds to the individual recognition code previously recorded in the code check section 20, the routine proceeds step S5. In step S5, the communication system between the transmitting and receiving circuit 19 and the smart key 50 is brought to an on state, the communication system being used for detecting drop of the smart key 50.

In step S6, it is determined whether the starter switch 23 (see Fig. 2) is turned on. If it is determined in step S6 that the starter switch 23 is not turned on, the determination in step S6 is repeatedly made. However, if it is determined in step S6 that the starter switch 23 is turned on, the fact that the starter switch 23 is turned on is transmitted to the control section 14 via the ECU 21 (see Fig. 2) and then the routine proceeds to step S7 when the engine (not shown) is started.

In step S8, the drop of the smart key 50 is detected. Then, in step S9, it is determined whether the main switch 22 is turned off. If it is determined in step S9 that the main switch 22 is not turned off, the determination in step S9 is repeatedly made. If it is determined in step S9 that the main switch 22 is turned off, the processing is finished.

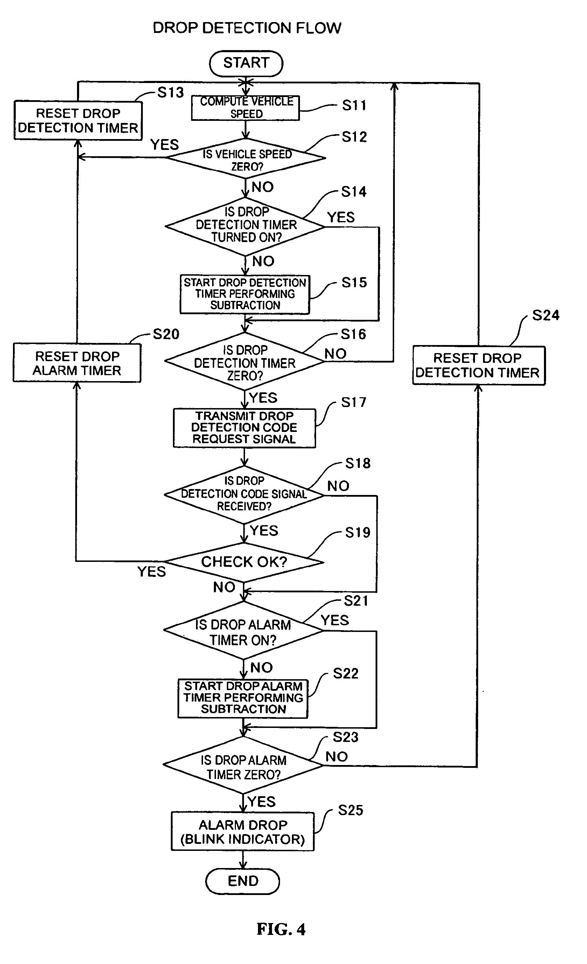

Reference is now additionally made to FIG. 4 in which there is shown a flow chart demonstrating a process flow of detecting drop in step S8 in Fig. 3.

In step S11 shown in Fig. 4, the number of revolutions of the rear wheel 12 (see Fig. 1) detected by the speed sensor 24 (see Fig. 2) is transmitted from the control section 14 (see Fig. 2) to the computation section 15 (see Fig. 2) and a vehicle speed is computed by the computation section 15. Then, in step S12, it is determined whether the vehicle speed is 0 km/h. If it is determined in step S12 that the vehicle speed is 0 km/h, the routine proceeds to step S13. Then, in step S13, the drop detection timer 16 (see Fig. 2) is reset and then the routine returns to step S11. If it is determined in step S12 that vehicle speed is not 0 km/h, the routine proceeds to step S14.

Then, in step S14, it is determined whether the drop detection timer 16 set for 10 seconds is on. If it is determined in step S14 that the drop detection timer 16 is not on, the routine proceeds to step S15 where the drop detection timer 16 is turned on and the subtraction counter starts subtraction, and then the routine proceeds to step S16. However, if it is determined in step S14 that the drop detection timer 16 is on, the routine also proceeds to step S16.

Then, in step S16, it is determined whether the subtraction counter of the drop detection timer 16 set for 10 seconds is 0. If it is determined in step S16 that the subtraction counter of the drop detection timer 16 is not 0, the routine returns to step S11. If it is determined in step S16 that the subtraction counter of the drop detection timer 16 is 0, the routine proceeds to step S17.

Then, in step S17, the drop detection code request signal is transmitted from the transmitting and receiving circuit 19 to the smart key 50. That is, when the vehicle speed is greater than 0 km/h in the state in which the communication system between the transmitting and receiving circuit 19 and the smart key 50 is on, the drop detection code request signal is transmitted approximately every 10 seconds from the transmitting and receiving circuit 19. At this time, when the smart key 50 is located within a transmittable range (about 1 m) near the control unit 13 (transmitting and receiving circuit 19), the drop detection code request signal from the transmitting and receiving circuit 19 is received by the smart key 50 and the drop detection code signal is transmitted from the smart key 50 to the transmitting and receiving circuit 19.

Then, in step S18, it is determined whether the drop detection code signal is received by the transmitting and receiving circuit 19 within a specified period. If it is determined in step S18 that the drop detection code signal is received, the routine proceeds to step S19 where the received drop detection code signal is transmitted to the code check section 20 via the control section 14 and it is determined by the code check section 20 whether the drop detection code corresponding to the drop detection code signal received from the smart key 50 (control section 14) corresponds to the drop detection code previously recorded in the code check section 20. If it is determined in step S19 that the drop detection code corresponding to the drop detection code signal received from the smart key 50 (control section 14) corresponds to the drop detection code previously recorded in the code check section 20, the routine proceeds to step S20. Then, in step S20, the drop alarm timer 17 (see Fig. 2) is reset and the routine returns to step S13. If it is determined in step S19 that the drop detection code corresponding to the drop detection code signal received from the smart key 50 (control section 14) does not correspond to the drop detection code previously recorded in the code check section 20, the routine proceeds to step S21. If it is determined in step S18 that the drop detection code signal is not received, the routine also proceeds to step S21.

Then, in step S21, it is determined whether the drop alarm timer 17 set for 60 seconds is on. If it is determined in step S21 that the drop alarm timer 17 is not on, the routine proceeds to step S22 where the drop alarm timer 17 is turned on and the subtraction counter starts subtraction. Then, the routine proceeds to step S23. If it is determined in step S21 that the drop alarm timer 17 is on, the routine also proceeds to step S23.

Then, in step S23, it is determined whether the subtraction counter of the drop alarm timer 17 set for 60 seconds is 0. If it is determined in step S23 that the subtraction counter of the drop alarm timer 17 is not 0, the routine proceeds to step S24. Then, in step S24, the drop detection timer 16 is reset and the routine returns to step S11. If it is determined in step S23 that the subtraction counter of the drop alarm timer 17 is 0, the routine proceeds to step S25.

In step S25, the indicator 26 (see Fig. 2) for the smart key system disposed in the meter 25 (see Fig. 2) is blinked by the indicator control circuit 18 (see Fig. 2). With this, the driver can find that he is highly likely to have dropped the smart key 50.

As described above, in step S9 shown in Fig. 3, the determination in step S9 is repeatedly made until the main switch 22 is turned off. Then, if it is determined in step S9 that the main switch 22 is turned off, the processing is finished.

In the first embodiment, as described above, there is provided the control section 14 that stops the transmitting and receiving circuit 19 from transmitting the drop detection code request signal at predetermined intervals (about 10 seconds) when the vehicle speed is 0 km/h in the state in which the communication system for detecting the drop of the smart key 50 is on. Thus, when the vehicle speed of the motorcycle 1 is 0 km/h, the communication between the transmitting and receiving circuit 19 and the smart key 50 can be stopped. When the vehicle speed is 0 km/h, there is a high possibility that also when the driver drops the smart key, the smart key 50 will be within a transmittable range (about 1 m) near the control unit 13 (transmitting and receiving circuit 19), so there is a high possibility that the drop detection code request signal and the drop detection code signal will be transmitted and received. For this reason, when the vehicle speed is 0 km/h and the driver has dropped the smart key 50, it is difficult to inform the driver that the driver has dropped the smart key 50, so the need for conducting the communication between the transmitting and receiving circuit 19 and the smart key 50 will be low. Thus, when the need for conducting the communication between the transmitting and receiving circuit 19 and the smart key 50 is low, it is possible to stop conducting the communication between the transmitting and receiving circuit 19 and the smart key 50 and to effectively suppress the consumption of the battery of the smart key 50.

Furthermore, in the first embodiment, the drop detection code request signal and the drop detection code signal are made simple short signals for determining whether the smart key 50 is dropped, so the time required for conducting the communication between the transmitting and receiving circuit 19 and the smart key 50 can be made short. Thus, it is possible to further suppress the consumption of the battery of the smart key 50.

### Second Embodiment

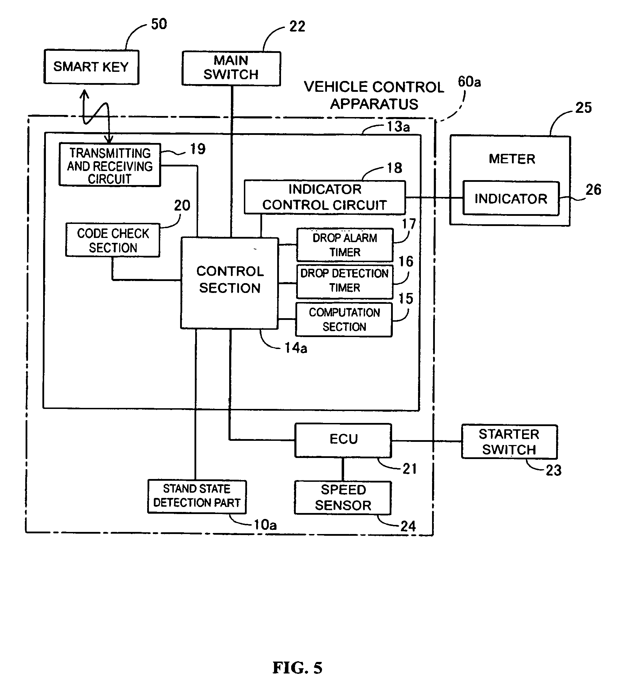

FIG. 5 diagrammatically shows the construction of a vehicle control apparatus of a motorcycle according to a second embodiment of the present invention. In this embodiment an example will be described with reference to Fig. 1 and Fig. 5: in the example, it is determined by the vehicle speed and the stand state whether the motorcycle is substantially in the stop state, which is different from the foregoing first embodiment, and then it is determined whether communication for detecting the drop of the smart key 50 is conducted.

In the motorcycle according to the second embodiment of the invention, as shown in Fig. 5, a control unit 13a includes a control section 14a and parts connected to the control section 14a, the parts including the computation section 15, the drop detection timer 16, the drop alarm timer 17, the indicator control circuit 18, the transmitting and receiving circuit 19, and the code check section 20.

The control section 14a is connected to a stand state detection part 10a. The stand state detection part 10a is one example of a "stop detection means" of the invention. This stand state detection part 10a is constructed so as to transmit whether the stand 9 (see Fig. 1) is in a parking state to the control section 14a.

A vehicle control apparatus 60a is constructed of the ECU 21, the speed sensor 24, the control unit 13a and the stand state detection part 10a.

The second embodiment is constructed in the following manner: when the stand 9 is in the parking state or the vehicle speed is 5 km/h or less in the state in which the communication system between the transmitting and receiving circuit 19 and the smart key 50 is on, the communication system being used for detecting the drop of the smart key 50, the motorcycle 1 is assumed to be substantially in the stop state and the communication for detecting the drop of the smart key 50 is stopped.

Other construction in the second embodiment is the same as in the first embodiment.

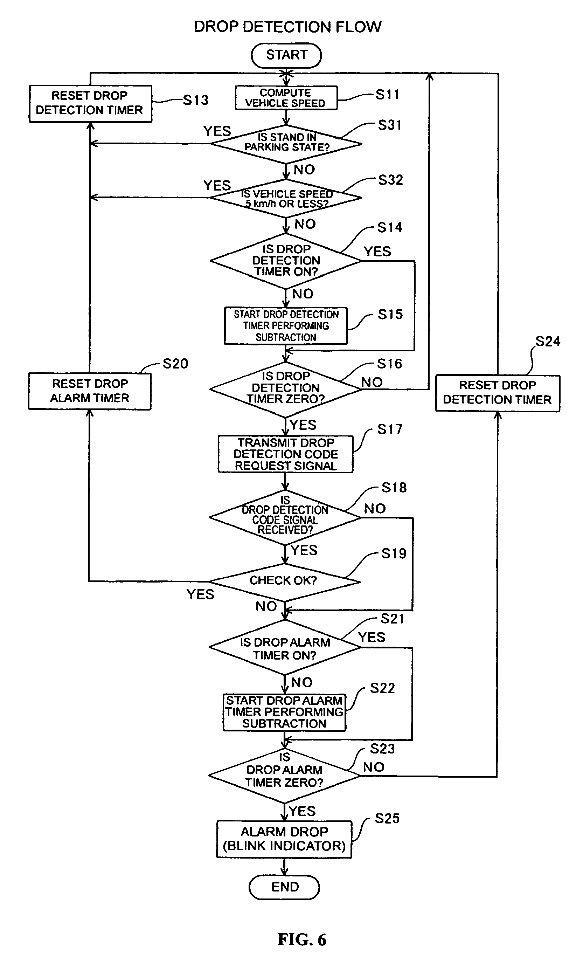

FIG. 6 is a flow chart demonstrating the flow process of detecting drop according to the second embodiment of the invention. In step S31 shown in Fig. 6, the state of the stand 9 (see Fig. 1) is transmitted to the control section 14a (see Fig. 5) by the stand state detection part 10a (see Fig. 5) and it is determined whether the stand 9 is in the parking state. If it is determined in step S31 that the stand 9 is in the parking state, the routine proceeds to step S13. Then, the drop detection timer 16 is reset in step S13 and the routine returns to step S11. If it is determined in step S31 that the stand 9 is not in the parking state, the routine proceeds to step S32.

Then, it is determined in step S32 whether the vehicle speed is 5 km/h or less. If it is determined in step S32 that the vehicle speed is 5 km/h or less, the routine proceeds to step 13 when the drop detection timer 16 is reset and the routine returns to step S11. However if it is determined in step S32 that the vehicle speed is not 5 km/h or less, the routine proceeds to step 14.

The flow of other processing in the processing of detecting drop of the second embodiment is the same as the processing of detecting drop in the first embodiment.

In the second embodiment, as described above, there is provided the control section 14a that assumes the motorcycle 1 to be substantially in the stop state and stops the transmitting and receiving circuit 19 from transmitting the drop detection code request signal at intervals of a specified period (about 10 seconds) when the stand 9 is in the parking state or the vehicle speed is 5 km/h or less in the state in which the communication system for detecting the drop of the smart key 50 is on. Thus, when the stand 9 is in the parking state or the vehicle speed is 5 km/h or less, it is possible to stop conducting the communication between the transmitting and receiving circuit 19 and the smart key 50. When the stand 9 is in the parking state or the vehicle speed is 5 km/h or less, there is a high possibility that also when the driver drops the smart key 50, the smart key 50 will be located within a transmittable range (about 1 m) near the control unit 13a (transmitting and receiving circuit 19), so there is a high possibility that the drop detection code request signal and the drop detection code signal will be transmitted and received. For this reason, when the stand 9 is in the parking state or the vehicle speed is 5 km/h or less, the communication between the transmitting and receiving circuit 19 and the smart key 50 is not conducted. This can effectively suppress the consumption of the battery of the smart key 50.

The other effects in the second embodiment are the same as in the first embodiment.

It should be considered that the embodiments disclosed herein are provided by way of example in all points and do not place limitations on the invention. The scope of the present invention is not shown by the descriptions of the foregoing embodiments but by the claims. Further, the scope of the present invention includes meaning equivalent to the scope of the claims and all modifications within the scope of the claims.

For example, in the foregoing embodiments, the motorcycle has been shown as an example of the vehicle provided with the vehicle control apparatus. However, the present invention is not limited to the motorcycle but can be applied to other vehicles such as an automobile, a bicycle, a three-wheeled vehicle, and an ATV (all terrain vehicle) as far as the vehicles are provided with the vehicle control apparatus.

Moreover, in the first embodiment an example of determining whether the vehicle speed is 0 km/h is provided in order to determine whether the motorcycle is substantially in the stop state. However, the present invention is not limited to this example, but in order to determine whether the motorcycle is substantially in the stop state, it is also recommendable to determine whether the vehicle speed is a specified value of, for example, 3 km/h to 5 km/h or less and to determine the motorcycle to be substantially in the stop state when the vehicle speed is the specified value of 3 km/h to 5 km/h or less.

Further, in the first embodiment, there has been described an example of detecting the vehicle speed in order to determine whether the motorcycle is substantially in the stop state. However, the present invention is not limited to this example, but in order to determine whether the motorcycle is substantially in the stop state, something other than the vehicle speed may be detected. Specifically, it may be detected whether the main stand or the side stand is in the parking state or whether the throttle is closed. Further, it may be detected whether the driver sits on the seat or whether the seat is opened. Still further, it may be detected whether the parking brake is on or whether the gear is at the neutral position. In this case, as shown in the second embodiment, it may be detected by the combination of the vehicle speed and any detection result described above whether the motorcycle is substantially in the stop state.

Further, in the foregoing embodiments, there have been described examples in which the subtraction counters of the drop detection timer and the drop alarm timer are set for 10 seconds and 60 seconds, respectively. However, the present invention is not limited to these examples, but the subtraction counters of the drop detection timer and the drop alarm timer may be set for values other than 10 seconds and 60 seconds, or may be changed according to the running state.

### Description of Reference Numerals and Signs

1 motorcycle (vehicle)
9 stand
10a stand state detection part (stop detection means, vehicle control apparatus)
13, 13a control unit (vehicle control apparatus)
14, 14a control section
19 transmitting and receiving circuit (transmitting means, receiving means)
21 ECU (vehicle control apparatus)
24 speed sensor (vehicle speed detection means, vehicle control apparatus)
50 smart key (mobile device)
60, 60a vehicle control apparatus

## Claims

1. A vehicle control apparatus comprising:
transmitting means (19) disposed on a vehicle side and adapted to transmit a code request signal at specified intervals to a mobile device (50) associated with a vehicle (1) for determining whether the mobile device (50) is located within a specified range of the vehicle (1);
receiving means (19) disposed on the vehicle side and adapted to receive a code signal transmitted from the mobile device (50) having received the code request signal; and
a control section (14, 14a) adapted to stop the transmitting means (19) from transmitting when the vehicle (1) is substantially in a stop state.

2. The vehicle control apparatus as claimed in claim 1, wherein the code request signal and the code signal are signals for detecting drop of the mobile device (50).

3. The vehicle control apparatus as claimed in claim 1 or 2, wherein the control section (14, 14a) is adapted to permit the transmitting means (19) to transmit when the vehicle (1) is changed from a state in which the vehicle (1) is substantially stopped to an operating state.

4. The vehicle control apparatus as claimed in claim 1, 2 or 3, wherein the control section (14, 14a) is adapted to recognize a substantially stop state of the vehicle (1) when a speed of the vehicle (1) is a specified value or less.

5. The vehicle control apparatus as claimed in any preceding claim, further comprising vehicle speed detection means (24) adapted to detect a speed of the vehicle (1).

6. The vehicle control apparatus as claimed in any preceding claim, further comprising stop detecting means (10a) adapted to detect whether the vehicle (1) is substantially in a stopped state.

7. The vehicle control apparatus as claimed in claim 6 when dependent on claim 5, wherein the stop detecting means (10a) is disposed separately from the vehicle speed detecting means (24).

8. The vehicle control apparatus as claimed in claim 6 or 7, wherein the stop detection means (10a) includes a stand state detection part for detecting whether a parking stand (9) of the vehicle (1) is in a parking state.

9. A vehicle control apparatus comprising:
transmitting means (19) disposed on a vehicle side and adapted to transmit a code request signal at specified intervals to a mobile device (50) associated with a vehicle (1) for determining whether the mobile device (50) is located within a specified range of the vehicle (1);
receiving means (19) disposed on the vehicle side and adapted to receive a code signal transmitted from the mobile device (50) having received the code request signal; and
a control section (14, 14a) adapted to control the transmitting means (19) so as to permit transmission at specified intervals only when the vehicle (1) is substantially in an operating state.

10. The vehicle control apparatus as claimed in claim 9, wherein the control section (14, 14a) is adapted to recognize a substantially operating state when a speed of the vehicle (1) is larger than a specified value.

11. A vehicle control apparatus according to claim 1, wherein the code request signal is for checking a mobile device (50) for permission authentication for use of the vehicle (1); and
the control section (14, 14a) stops the transmitting means (19) from making transmission at specified intervals when the vehicle (1) is also in a state in which a communication system constructed of the transmitting means (19), the receiving means (19), and the mobile device (50) is on.

12. A vehicle control apparatus according to claim 9, wherein
the code request signal is for checking a mobile device (50) for permission authentication for use of the vehicle (1); and
the control section (14, 14a) that controls the transmitting means (19) so as to make transmission at specified intervals when the vehicle (1) is also in a state in which a communication system constructed of the transmitting means (19), the receiving means (19), and the mobile device (50) is on.

13. A vehicle (1) comprising the vehicle control apparatus as claimed in any one of the claims 1 to 12.

## Patentansprüche

1. Fahrzeug-Steuerungsvorrichtung, die Folgendes umfasst:
Sendemittel (19), die auf einer Fahrzeugseite angeordnet und dafür eingerichtet sind, in spezifizierten Abständen ein Codeanforderungssignal an eine mobile Einrichtung (50) zu senden, die mit einem Fahrzeug (1) verknüpft ist, um festzustellen, ob sich die mobile Einrichtung (50) innerhalb einer spezifizierten Reichweite des Fahrzeugs (1) befindet,
Empfangsmittel (19), die auf der Fahrzeugseite angeordnet und dafür eingerichtet sind, ein Codesignal zu empfangen, das von der mobilen Einrichtung (50) gesendet wird, die das Codeanforderungssignal empfangen hat, und
eine Steuerungssektion (14, 14a), die dafür eingerichtet ist, zu verhindern, dass die Sendemittel (19) senden, wenn sich das Fahrzeug (1) im Wesentlichen in einem Haltezustand befindet.

2. Fahrzeug-Steuerungsvorrichtung nach Anspruch 1, wobei das Codeanforderungssignal und das Codesignal Signale sind, um einen Verlust der mobilen Einrichtung (50) zu erkennen.

3. Fahrzeug-Steuerungsvorrichtung nach Anspruch 1 oder 2, wobei die Steuerungssektion (14, 14a) dafür eingerichtet ist, zu ermöglichen, dass die Sendemittel (19) senden, wenn das Fahrzeug (1) von einem Zustand, in dem das Fahrzeug (1) im Wesentlichen angehalten ist, zu einem Betriebszustand verändert wird.

4. Fahrzeug-Steuerungsvorrichtung nach Anspruch 1, 2 oder 3, wobei die Steuerungssektion (14, 14a) dafür eingerichtet ist, einen wesentlichen Haltezustand des Fahrzeugs (1) zu erkennen, wenn eine Geschwindigkeit des Fahrzeugs (1) einen spezifizierten Wert hat oder geringer ist.

5. Fahrzeug-Steuerungsvorrichtung nach einem der vorhergehenden Ansprüche, die ferner Fahrzeug-Geschwindigkeitserkennungsmittel (24) umfasst, die dafür eingerichtet sind, eine Geschwindigkeit des Fahrzeugs (1) zu erkennen.

6. Fahrzeug-Steuerungsvorrichtung nach einem der vorhergehenden Ansprüche, die ferner Halterkennungsmittel (10a) umfasst, die dafür eingerichtet sind, zu erkennen, ob sich das Fahrzeug (1) im Wesentlichen in einem angehaltenen Zustand befindet.

7. Fahrzeug-Steuerungsvorrichtung nach Anspruch 6, soweit abhängig von Anspruch 5, wobei die Halterkennungsmittel (10a) gesondert von den Fahrzeug-Geschwindigkeitserkennungsmitteln (24) angeordnet sind.

8. Fahrzeug-Steuerungsvorrichtung nach Anspruch 6 oder 7, wobei die Halterkennungsmittel (10a) einen Ständerzustand-Erkennungsteil einschließen, um zu erkennen, ob sich ein Parkständer (9) des Fahrzeugs (1) in einem Parkzustand befindet.

9. Fahrzeug-Steuerungsvorrichtung, die Folgendes umfasst:
Sendemittel (19), die auf einer Fahrzeugseite angeordnet und dafür eingerichtet sind, in spezifizierten Abständen ein Codeanforderungssignal an eine mobile Einrichtung (50) zu senden, die mit einem Fahrzeug (1) verknüpft ist, um festzustellen, ob sich die mobile Einrichtung (50) innerhalb einer spezifizierten Reichweite des Fahrzeugs (1) befindet,
Empfangsmittel (19), die auf der Fahrzeugseite angeordnet und dafür eingerichtet sind, ein Codesignal zu empfangen, das von der mobilen Einrichtung (50) gesendet wird, die das Codeanforderungssignal empfangen hat, und
eine Steuerungssektion (14, 14a), die dafür eingerichtet ist, die Sendemittel (19) so zu steuern, dass ein Senden in spezifizierten Abständen nur ermöglicht wird, wenn sich das Fahrzeug (1) im Wesentlichen in einem Betriebszustand befindet.

10. Fahrzeug-Steuerungsvorrichtung nach Anspruch 9, wobei die Steuerungssektion (14, 14a) dafür eingerichtet ist, einen wesentlichen Betriebszustand zu erkennen, wenn eine Geschwindigkeit des Fahrzeugs (1) größer ist als ein spezifizierter Wert.

11. Fahrzeug-Steuerungsvorrichtung nach Anspruch 1, wobei das Codeanforderungssignal dazu dient, eine mobile Einrichtung (50) auf eine Erlaubnisbestätigung zur Benutzung des Fahrzeugs (1) zu überprüfen, und
die Steuerungssektion (14, 14a) verhindert, dass die Sendemittel (19) in spezifizierten Abständen eine Sendung vornehmen, wenn sich das Fahrzeug (1) ebenfalls in einem Zustand befindet, in dem eine Kommunikationsanlage, die aus den Sendemitteln (19), den Empfangsmitteln (19) und der mobilen Einrichtung (50) aufgebaut ist, eingeschaltet ist.

12. Fahrzeug-Steuerungsvorrichtung nach Anspruch 9, wobei
das Codeanforderungssignal dazu dient, eine mobile Einrichtung (50) auf eine Erlaubnisbestätigung zur Benutzung des Fahrzeugs (1) zu überprüfen, und
die Steuerungssektion (14, 14a) die Sendemittel (19) so steuert, dass sie in spezifizierten Abständen eine Sendung vornehmen, wenn sich das Fahrzeug (1) ebenfalls in einem Zustand befindet, in dem eine Kommunikationsanlage, die aus den Sendemitteln (19), den Empfangsmitteln (19) und der mobilen Einrichtung (50) aufgebaut ist, eingeschaltet ist.

13. Fahrzeug (1), das die Fahrzeug-Steuerungsvorrichtung nach einem der Ansprüche 1 bis 12 umfasst.

## Revendications

1. Appareil de commande d'un véhicule, comprenant :
un moyen de transmission (19) agencé sur un côté du véhicule et adapté pour transmettre un signal de demande de code à des intervalles spécifiés à un dispositif mobile (50) associé à un véhicule (1), pour déterminer si le dispositif mobile (50) est situé dans le cadre d'une portée spécifiée du véhicule (1) ;
un moyen de réception (19), agencé sur le côté du véhicule et adapté pour recevoir un signal de code transmis par le dispositif mobile (150) ayant reçu le signal de demande de code ; et
une section de commande (14, 14a), adaptée pour arrêter la transmission par le moyen de transmission (19) lorsque le véhicule (1) se trouve pratiquement dans un état d'arrêt.

2. Appareil de commande d'un véhicule selon la revendication 1, dans lequel le signal de demande de code et le signal de code sont des signaux destinés à détecter une chute du dispositif mobile (50).

3. Appareil de commande d'un véhicule selon les revendications 1 ou 2, dans lequel la section de commande (14, 14a) est adaptée pour permettre la transmission par le moyen de transmission (19) lorsque le véhicule (1) passe d'un état dans lequel le véhicule (1) est pratiquement à l'arrêt à un état opérationnel.

4. Appareil de commande d'un véhicule selon les revendications 1, 2 ou 3, dans lequel la section de commande (14, 14a) est adaptée pour reconnaître un état pratiquement à l'arrêt du véhicule (1) lorsqu'une vitesse du véhicule (1) correspond à une valeur spécifique ou est inférieure à celle-ci.

5. Appareil de commande d'un véhicule selon l'une quelconque des revendications précédentes, comprenant en outre un moyen de détection de la vitesse du véhicule (24), adapté pour détecter une vitesse du véhicule (1).

6. Appareil de commande d'un véhicule selon l'une quelconque des revendications précédentes, comprenant en outre un moyen de détection d'un arrêt (10a), adapté pour détecter si le véhicule (1) se trouve pratiquement dans un état d'arrêt.

7. Appareil de commande d'un véhicule selon la revendication 6, dépendant de la revendication 5, dans lequel le moyen de détection de l'arrêt (10a) est agencé séparément du moyen de détection de la vitesse du véhicule (24).

8. Appareil de commande d'un véhicule selon les revendications 6 ou 7, dans lequel le moyen de détection de l'arrêt (10a) englobe une partie de détection d'un état de la béquille pour détecter si une béquille de stationnement (9) du véhicule (1) se trouve dans un état de stationnement.

9. Appareil de commande d'un véhicule, comprenant :
un moyen de transmission (19) agencé sur un côté du véhicule et adapté pour transmettre un signal de demande de code à des intervalles spécifiés à un dispositif mobile (50) associé à un véhicule (1), pour détecter si le dispositif mobile (50) est situé dans le cadre d'une portée spécifiée du véhicule (1) ;
un moyen de réception (19), agencé sur le côté du véhicule et adapté pour recevoir un signal de code transmis par le dispositif mobile (50) ayant reçu le signal de demande de code ; et
une section de commande (14, 14a), adaptée pour commander le moyen de transmission (19), de sorte à permettre la transmission à des intervalles spécifiés uniquement si le véhicule (1) se trouve pratiquement dans un état opérationnel.

10. Appareil de commande d'un véhicule selon la revendication 9, dans lequel la section de commande (14, 14a) est adaptée pour reconnaître un état pratiquement opérationnel lorsqu'une vitesse du véhicule (1) est supérieure à une valeur spécifiée.

11. Appareil de commande d'un véhicule selon la revendication 1, dans lequel le signal de demande de code sert à rechercher dans un dispositif mobile (50) une authentification d'autorisation pour l'utilisation du véhicule (1) ; et
la section de commande (14, 14a) arrêtant la transmission à des intervalles spécifiés par le moyen de transmission (19) lorsque le véhicule (1) se trouve dans un état dans lequel un système de communication, comprenant le moyen de transmission (19), le moyen de réception (19) et le dispositif mobile (50), est branché.

12. Appareil de commande d'un véhicule selon la revendication 9, dans lequel :
le signal de demande de code sert à rechercher dans un dispositif mobile (50) une authentification d'autorisation pour l'utilisation du véhicule (1) ; et
la section de commande (14, 14a) contrôlant le moyen de transmission (19), de sorte à assurer la transmission à des intervalles spécifiés lorsque le véhicule (1) se trouve également dans un état dans lequel un système de communication, comprenant le moyen de transmission (19), le moyen de réception (19) et le dispositif mobile (50), est branché.

13. Véhicule (1), comprenant l'appareil de commande du véhicule selon l'une quelconque des revendications 1 à 12.
